# EUROPEAN PATENT APPLICATION

(11) **EP 3 493 434 A1**
(43) Date of publication of application: **05.06.2019**
(21) Application number: 17205171.6
(22) Date of filing: 04.12.2017
(51) Int. Cl.: H04J 3/06, H04L 7/00

(54) **NETWORK SWITCH DEVICE AND METHOD OF OPERATING THE SAME**

(71) Applicant: Microelectronics Technology Inc., Hsinchu 300 (TW)
(72) Inventor: CHEN, CHUN-YU, Hsinchu, Taiwan 300, R.O.C. (TW)
(74) Representative: Michalski Hüttermann & Partner Patentanwälte mbB

(57) **Abstract**

The present disclosure provides a network switch device and a method of operating the same. The network switch device includes a first port, a second port and a processing device. The first port receives a first clock signal, wherein the first port has a first interface including a first interface number. The second port receives a second clock signal, wherein the second port has a second interface including a second interface number, wherein the first clock signal and the second clock signal have the same quality level. The processing device selects a reference clock signal for synchronization from the first clock signal and the second clock signal based on the first interface number and the second interface number.

## Description

### TECHNICAL FIELD

The present disclosure relates to a network switch device and a method of operating the same, and more particularly, to a network switch device capable of selecting a reference clock signal for synchronization from two clock signals with the same quality level and a method of operating the same.

### DISCUSSION OF THE BACKGROUND

A network switch (also called a switching hub, a bridging hub, and, officially, a MAC bridge) is a computer networking device that connects devices together on a computer network using packet switching to receive, process, and forward data to a destination device. A network switch is a multiport network bridge that uses hardware addresses to process and forward data at the data link layer (layer 2) of the OSI model. Some switches can also process data at the network layer (layer 3) by additionally incorporating routing functionality. Such switches are commonly known as layer-3 switches or multilayer switches. Switches for Ethernet are the most common form of network switch.

This Discussion of the Background section is for background information only. The statements in this Discussion of the Background are not an admission that the subject matter disclosed in this section constitutes a prior art to the present disclosure, and no part of this section may be used as an admission that any part of this application, including this Discussion of the Background section, constitutes prior art to the present disclosure.

### SUMMARY

One aspect of the present disclosure provides a network switch device. The network switch device includes a first port, a second port and a processing device. The first port is configured to receive a first clock signal, wherein the first port has a first interface including a first interface number. The second port is configured to receive a second clock signal, wherein the second port has a second interface including a second interface number, wherein the first clock signal and the second clock signal have the same quality level. The processing device is configured to select a reference clock signal for synchronization from the first clock signal and the second clock signal based on the first interface number and the second interface number.

In some embodiments, the processing device is configured to select the reference clock signal based on an order of the first interface number and the second interface number.

In some embodiments, the processing device is configured to assign the first interface number and the second interface number to the first interface and the second interface, respectively.

In some embodiments, the first port includes a first port number and the second port includes a second port number, wherein the processing device is configured to select the reference clock signal based on the first port number and the second port number when the first interface number is identical to the second interface number.

In some embodiments, the processing device is configured to select the reference clock signal based on an order of the first port number and the second port number when the first interface number is identical to the second interface number.

In some embodiments, the processing device is configured to assign the first port number and the second port number to the first port and the second port, respectively.

In some embodiments, the first interface or the second interface includes a fiber optic connector.

In some embodiments, the first interface or the second interface includes an RJ45 connector.

In some embodiments, the first port is configured to receive a message, the message including a first identifier, the first identifier being an internet protocol (IP) address, a media access control (MAC) address, or a device identifier.

Another aspect of the present disclosure provides another network switch device. The network switch device includes a first port, a second port and a processing device. The first port is configured to receive a first clock signal, wherein the first port has a first port number. The second port is configured to receive a second clock signal, wherein the second port has a second port number, wherein the first clock signal and the second clock signal have the same quality level. The processing device is configured to select a reference clock signal for synchronization from the first clock signal and the second clock signal based on the first port number and the second port number.

In some embodiments, the processing device is configured to select the reference clock signal based on an order of the first port number and the second port number.

In some embodiments, the processing device is configured to assign the first port number and the second port number to the first port and the second port, respectively.

Another aspect of the present disclosure provides a method of operating a network switch device, comprising the steps of: receiving a first clock signal at a first port of the network switch device, the first port having a first interface including a first interface number; receiving a second clock signal at a second port of the network switch device, the second port having a second interface including a second interface number, wherein the first clock signal and the second clock signal have the same quality level; and selecting a reference clock signal for synchronization, based on the first interface number and the second interface number, from the first clock signal and the second clock signal.

In some embodiments, the method further comprises assigning the first interface number to the first interface; and assigning the second interface number to the second interface.

In some embodiments, the step of selecting a reference clock signal for synchronization is performed based on an order of the first interface number and the second interface number.

In some embodiments, the first port includes a first port number and the second port includes a second port number, and the step of selecting a reference clock signal for synchronization is performed based on the first port number and the second port number when the first interface number is identical to the second interface number.

In some embodiments, the step of selecting a reference clock signal for synchronization is performed based on an order of the first port number and the second port number.

In some embodiments, the first port includes a first port number and the second port includes a second port number, and the step of selecting a reference clock signal for synchronization is performed based on an order of the first port number and the second port number and an order of the first interface number and the second interface number.

In some embodiments, the first port includes a first port number and the second port includes a second port number, and the step of selecting a reference clock signal for synchronization is performed based on an order of the first port number and the second port number and an order of the first interface number and the second interface number.

In some embodiments, the method further comprises assigning the first port number to the first port; and assigning the second port number to the second port

In some embodiments, the method further comprises receiving a message, the message including a first identifier, the first identifier being an internet protocol (IP) address, a media access control (MAC) address or a device identifier.

In the present disclosure, using the method, the network switch device is able to select a reference clock signal for synchronization from the first clock signal and the second clock signal even though the first clock signal and the second clock signal have the same quality level. Even though the first interface and the second interface, for example, have the same type, the network switch device is still able to select the reference clock signal. There is no need to worry about a type of an interface of a port adopted by the network switch device. The network switch device provides relatively high flexibility in usage.

In contrast, in some existing network switches, such existing network switch device has no such mechanism capable of effectively resolving a circumstance in which two clock signals have the same quality level. As a result, the existing network switch device cannot provide the reference clock signal in such circumstance, with the result that a system adopting the existing network switch may work abnormally.

The foregoing has outlined rather broadly the features and technical advantages of the present disclosure in order that the detailed description of the disclosure that follows may be better understood. Additional features and advantages of the disclosure will be described hereinafter, and form the subject of the claims of the disclosure. It should be appreciated by those skilled in the art that the conception and specific embodiment disclosed may be readily utilized as a basis for modifying or designing other structures or processes for carrying out the same purposes of the present disclosure. It should also be realized by those skilled in the art that such equivalent constructions do not depart from the spirit and scope of the disclosure as set forth in the appended claims.

### BRIEF DESCRIPTION OF THE DRAWINGS

A more complete understanding of the present disclosure may be derived by referring to the detailed description and claims. The disclosure should also be understood to be connected to the figures' reference numbers, which refer to similar elements throughout the description, and:
FIG. 1 is a block diagram of a network including a network switch device, in accordance with some embodiments of the present disclosure.
FIG. 2 is a flow diagram of a method of operating the network switch device shown in FIG. 1, in accordance with some embodiments of the present disclosure.
FIG. 3 is a schematic diagram illustrating an operation of the network switch device shown in FIG. 1, in accordance with some embodiments of the present disclosure.
FIG. 4 is a flow diagram of another method of operating the network switch device shown in FIG. 1, in accordance with some embodiments of the present disclosure.
FIG. 5 is a schematic diagram illustrating an operation of the network switch device shown in FIG. 1, in accordance with some embodiments of the present disclosure.
FIG. 6 is a schematic diagram illustrating another operation of the network switch device shown in FIG. 1, in accordance with some embodiments of the present disclosure.

### DETAILED DESCRIPTION

Embodiments, or examples, of the disclosure illustrated in the drawings are now described using specific language. It shall be understood that no limitation of the scope of the disclosure is hereby intended. Any alteration or modification of the described embodiments, and any further applications of principles described in this document, are to be considered as normally occurring to one of ordinary skill in the art to which the disclosure relates. Reference numerals may be repeated throughout the embodiments, but this does not necessarily mean that feature(s) of one embodiment apply to another embodiment, even if they share the same reference numeral.

It shall be understood that, although the terms first, second, third, etc. may be used herein to describe various elements, or components, these elements or components are not limited by these terms. Rather, these terms are merely used to distinguish one element or component from another element or component. Thus, a first element or component discussed below could be termed a second element or component without departing from the teachings of the present inventive concept.

The terminology used herein is for the purpose of describing particular example embodiments only and is not intended to be limited to the present inventive concept. As used herein, the singular forms "a," "an" and "the" are intended to include the plural forms as well, unless the context clearly indicates otherwise. It shall be further understood that the terms "comprises" and "comprising," when used in this specification, point out the presence of stated features, integers, steps, operations, elements, or components, but do not preclude the presence or addition of one or more other features, integers, steps, operations, elements, components, or groups thereof.

Aspects of the present disclosure may be implemented in methods or computer program products. Accordingly, the disclosure may be embodied in hardware and/or in hardware/software (including firmware). Furthermore, the present disclosure may take the form of a computer program product on a computer-usable or computer-readable storage medium having computer-usable or computer-readable program code embodied in the medium for use by or in connection with an instruction execution system. The actual software code or specialized control hardware used to implement embodiments described herein is not limiting of the disclosure. Thus, the operation of the aspects are described without reference to the specific software code, as it is understood that those skilled in the art will be able to design software and control hardware to implement the aspects based on the description herein. Furthermore, certain portions of the disclosure may be implemented as "logic" that performs one or more functions. This logic may include hardware, such as an application specific integrated circuit or field programmable gate array or a combination of hardware and software.

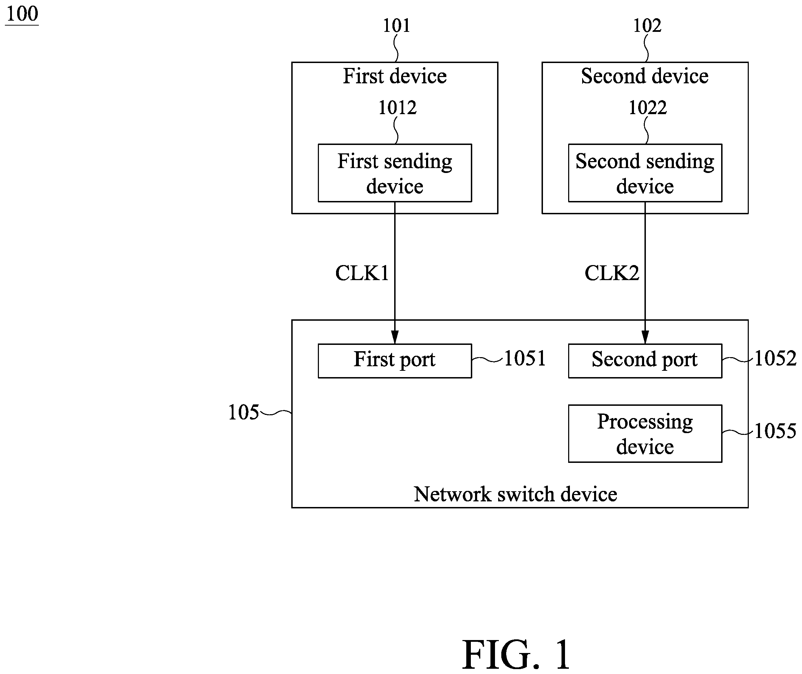

FIG. 1 is a block diagram of a network 100 including a network switch device 105, in accordance with some embodiments of the present disclosure. Referring to FIG. 1, the network 100 includes a first device 101 and a second device 102 in addition to the network switch device 105.

The network switch device 105 functions to receive a first clock signal CLK1 and a second a second clock signal CLK2 from the first device 101 and the second device 102, respectively, as described in detail below. The first clock signal CLK1 and the second clock signal CLK2 have the same quality level. In some embodiments, the first device 101 utilizes an Ethernet Synchronization Message Channel (ESMC) protocol for implementing clock synchronization. In some embodiments, the second device 102 utilizes an Ethernet Synchronization Message Channel (ESMC) protocol for implementing clock synchronization.

The network switch device 105 includes, but is not limited to, a first port 1051, a second port 1052 and a processing device 1055.

The first port 1051 receives the first clock signal CLK1 from a first sending device 1012 of the first device 101. In further detail, the first sending device 1012 sends the first clock signal CLK1 to the first port 1051 of the network switch device 105 by wired connection or wireless connection. The first clock signal CLK1 includes, but is not limited to, a first clock identifier and a first quality level. In some embodiments, the first clock identifier includes, but is not limited to, at least one of an internet protocol (IP) address of the first device 101, a media access control (MAC) address of the first device 101 and a device identifier of the first device 101. The device identifier of the first device 101 includes, but is not limited to, a serial number of the first device 101. Furthermore, the first port 1051 includes a first interface. In some embodiments, the first interface includes a first fiber optic connector. In some embodiments, the first interface includes a first RJ45 connector.

The second port 1052 receives the second clock signal CLK2 from a second sending device 1022 of the second device 102. In further detail, the second sending device 1022 sends the second clock signal CLK2 to the second port 1052 of the network switch device 105 by wired connection or wireless connection for implementing clock synchronization. The second clock signal CLK2 includes, but is not limited to, a second clock identifier and a second quality level. In some embodiments, the second clock identifier includes, but is not limited to, at least one of an Internet protocol (IP) address of the second device 102, a media access control (MAC) address of the second device 102, and a device identifier of the second device 102. The device identifier of the second device 102 includes, but is not limited to, a serial number of the second device 102. Furthermore, the second port 1052 includes a second interface. In some embodiments, the second interface includes a second fiber optic connector. In some embodiments, the second interface includes a second RJ45 connector.

The processing device 1055 functions to assign a first port number to the first port 1051, a second port number to the second port 1052, a first interface number to the first interface of the first port 1051, and a second interface number to the second interface of the second port 1052. In some embodiments, the processing device 1055, based on a type of an interface, determines an interface number assigned to an interface of a port of the network switch device 105. For example, when a type of the first interface is the same as that of the second interface, the first interface number equals the second interface number and vice versa. Moreover, the processing device 1055 functions to select a reference clock signal for synchronization, based on the first port number, the second port number, the first interface number and the second interface number, from the first clock signal CLK1 and the second clock signal CLK2.

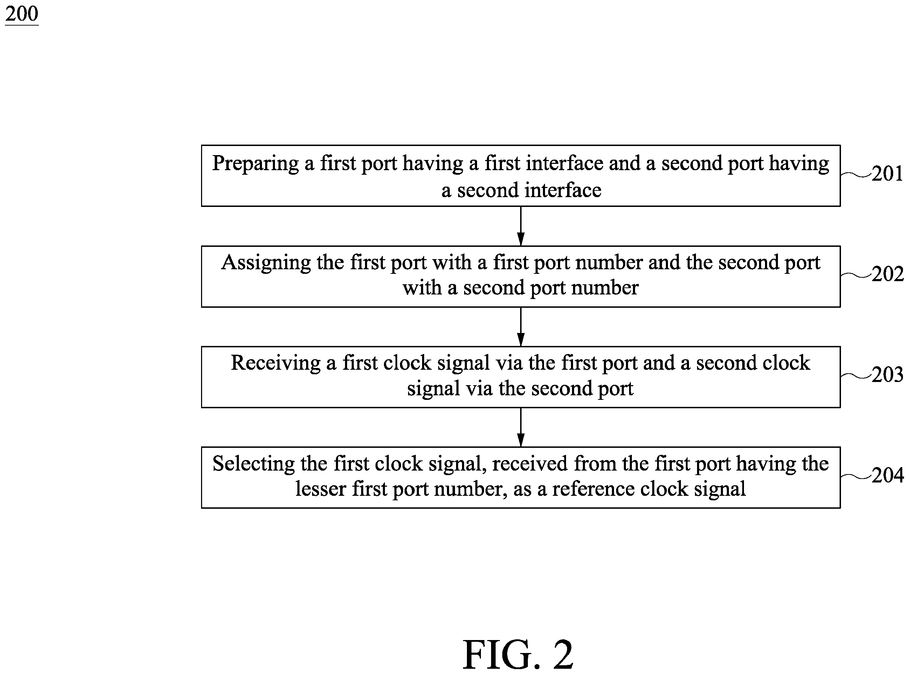

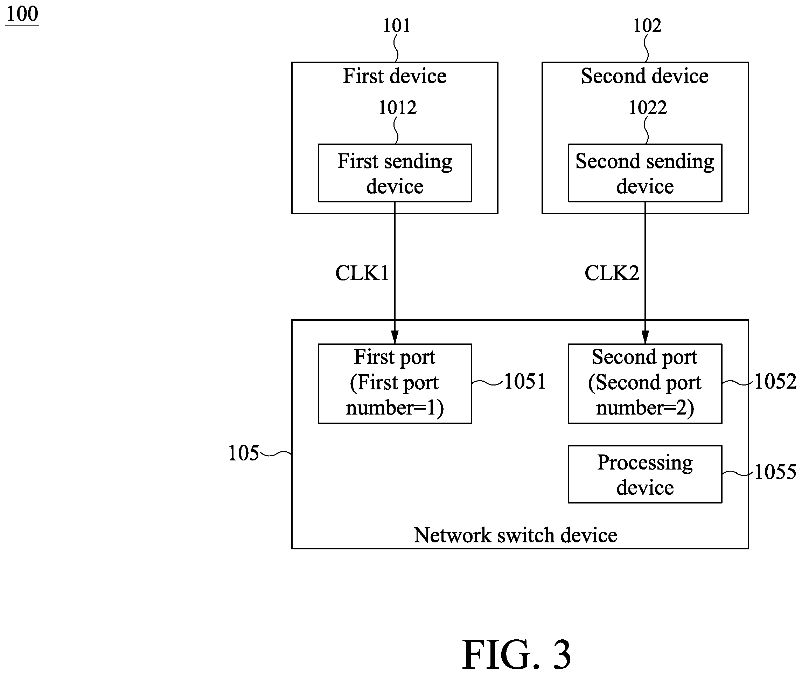

FIG. 2 is a flow diagram of a method 200 of operating the network switch device 105 shown in FIG. 1, in accordance with some embodiments of the present disclosure. FIG. 3 is a schematic diagram illustrating an operation of the network switch device 105 shown in FIG. 1, in accordance with some embodiments of the present disclosure.

Referring to FIG. 2, also referring to FIG. 3 when appropriate, the method 200 includes operations 201, 202, 203 and 204.

The method 200 begins with operation 201, in which a first port 1051 and a second port 1052 of the network switch device 105 are prepared.

The method 200 continues with operation 202, in which the processing device 1055 assigns the first port 1051 with the first port number and the second port 1052 with the second port number.

The method 200 continues with operation 203, in which the processing device 1055 receives the first clock signal CLK1 via the first port 1051 and the second clock signal CLK2 via the second port 1052. Operations 202 to 203 are interchangeable in order.

The method 200 continues with operation 204. For the purpose of discussion, it is assumed that the first port number is less than the second port number, as shown in FIG. 3. In operation 204, the processing device 1055 selects the first clock signal CLK1, received from the first port 1051 having the lesser first port number, as the reference clock signal for synchronization.

The method 200 is merely an example, and is not intended to limit the present disclosure beyond what is explicitly recited in the claims. Additional operations can be provided before, during, and after the method 200, and some operations described can be replaced, eliminated, or moved around for additional embodiments of the method.

In summary, the processing device 1055, based on the first port number and the second port number, selects the reference clock signal from the first clock signal CLK1 and the second clock signal CLK2. In further detail, the processing device 1055 selects the reference clock signal based on an order of the first port number and the second port number. For example, the first port number is 1, and the second port number is 2. The first port number in order is prior to the second port number. Hence, the processing device 1055 selects the first clock signal CLK1, received from the first port 1051 having the lesser first port number, as the reference clock signal.

In the present disclosure, using the method 200, the network switch device 100 is able to select a reference clock signal for synchronization from the first clock signal CLK1 and the second clock signal CLK2 even though the first clock signal CLK1 and the second clock signal CLK2 have the same quality level.

In contrast, in some existing network switches, such existing network switch device has no such mechanism capable of effectively resolving a circumstance in which two clock signals have the same quality level. As a result, the existing network switch device cannot provide the reference clock signal in such circumstance, causing a system adopting the existing network switch to work abnormally.

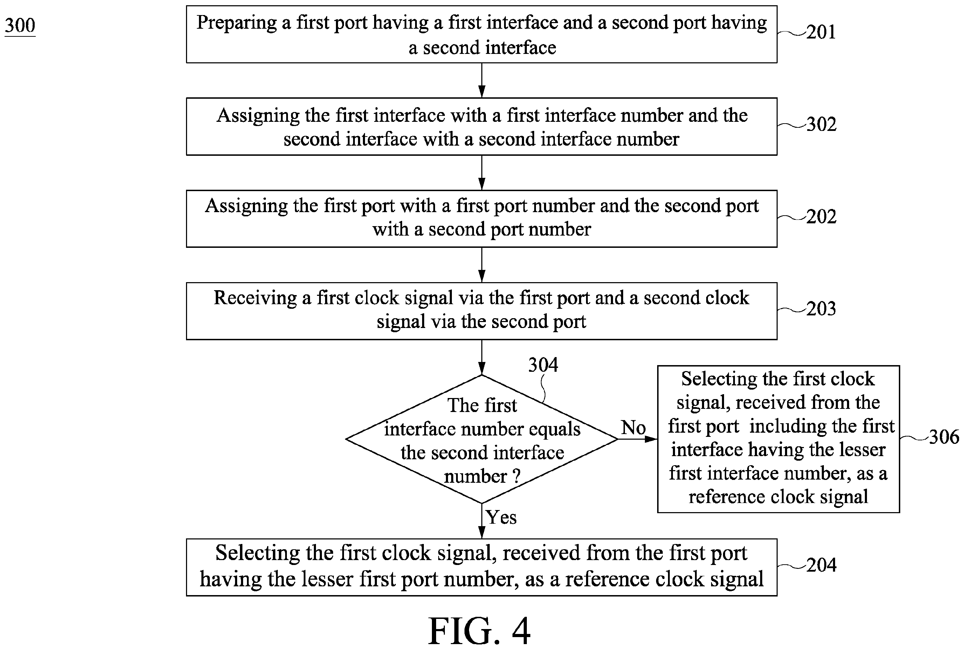

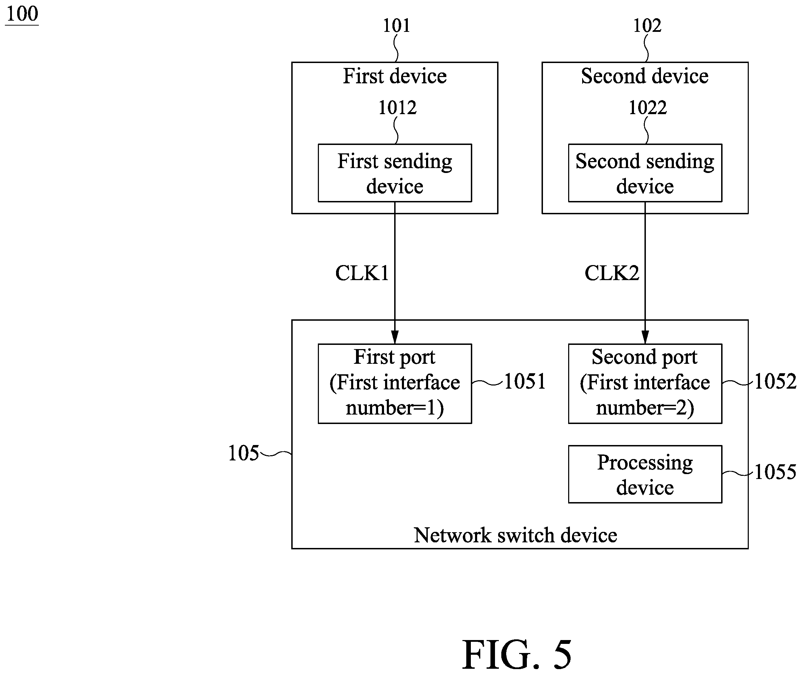

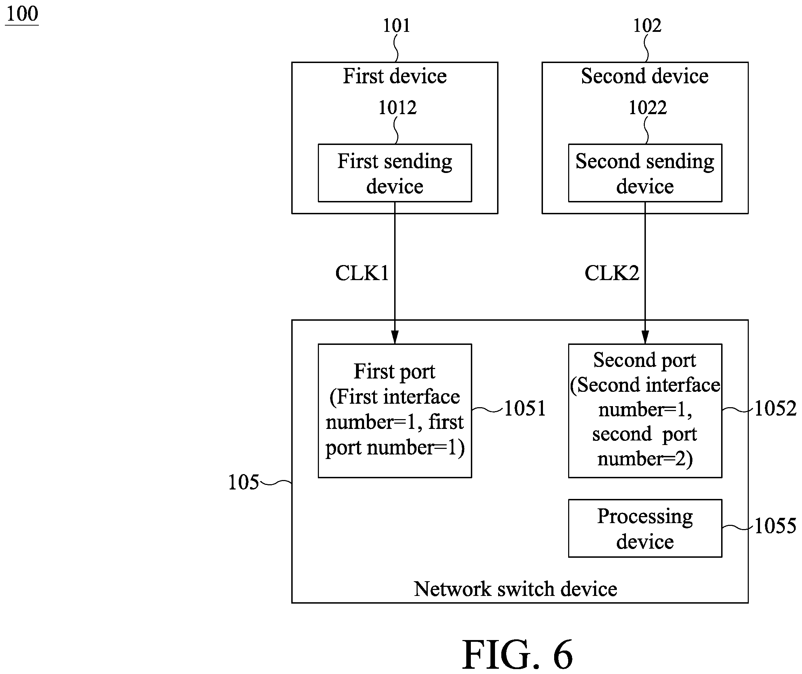

FIG. 4 is a flow diagram of a method 300 of operating the network switch device 105 shown in FIG. 1, in accordance with some embodiments of the present disclosure. FIG. 5 is a schematic diagram illustrating an operation of the network switch device 105 shown in FIG. 1, in accordance with some embodiments of the present disclosure. FIG. 6 is a schematic diagram illustrating another operation of the network switch device 105 shown in FIG. 1, in accordance with some embodiments of the present disclosure.

Referring to FIG. 4, and also referring to FIGS. 5 and 6 when appropriate, the method 300 is similar to the method 200 described and illustrated with reference to FIG. 2 except that, for example, the method 300 further includes operations 302, 304 and 306.

In operation 302, the processing device 1055 assigns a first interface of the first port with the first interface number, and a second interface of the second port with the second interface number.

In operation 304, the processing device 1055 determines whether the first interface number equals the second interface number.

If negative, for example, a type of the first interface different from that of the second interface, the method 300 continues with operation 306. In operation 306, for the purpose of discussion, it is assumed that the first interface number is less than the second interface number as shown in FIG. 5. In operation 306, the processing device 1055 selects the first clock signal CLK1, received from the first port 1051 including the first interface having the lesser first interface number, as the reference clock signal for synchronization.

The method 300 is merely an example, and is not intended to limit the present disclosure beyond what is explicitly recited in the claims. Additional operations can be provided before, during, and after the method 300, and some operations described can be replaced, eliminated, or moved around for additional embodiments of the method.

In summary, the processing device 1055, based on the first interface number and the second interface number, selects the reference clock signal from the first clock signal CLK1 and the second clock signal CLK2. In further detail, the processing device 1055 selects the reference clock signal based on an order of the first interface number and the second interface number. For example, the first interface number is 1, and the second interface number is 2. The first interface number in order is prior to the second interface number. Hence, the processing device 1055 selects the first clock signal CLK1, received from the first port 1051 including the first interface having the lesser first interface number, as the reference clock signal.

If affirmative, the method 300 continues with operation 204. In operation 204, the processing device 1055 selects the first clock signal CLK1, received from the first port 1051 having the lesser first port number, as the reference clock signal for synchronization.

In summary, the processing device 1055, based on the first port number and the second port number, selects the reference clock signal from the first clock signal CLK1 and the second clock signal CLK2 when the first interface number equals the second interface number.

In the present disclosure, using the method 300, the network switch device 100 is able to select a reference clock signal for synchronization from the first clock signal CLK1 and the second clock signal CLK2 even though the first clock signal CLK1 and the second clock signal CLK2 have the same quality level. Even though the first interface and the second interface, for example, have the same type, the network switch device 100 is still able to select the reference clock signal. There is no need to worry about a type of an interface of a port adopted by the network switch device 100. The network switch device 100 provides relatively high flexibility in usage.

In contrast, in some existing network switches, such existing network switch device has no such mechanism capable of effectively resolving a circumstance in which two clock signals have the same quality level. As a result, the existing network switch device cannot provide the reference clock signal in such circumstance, causing a system adopting the existing network switch to work abnormally.

One aspect of the present disclosure provides a network switch device. The network switch device includes a first port, a second port and a processing device. The first port is configured to receive a first clock signal, wherein the first port has a first interface including a first interface number. The second port is configured to receive a second clock signal, wherein the second port has a second interface including a second interface number, wherein the first clock signal and the second clock signal have the same quality level. The processing device is configured to select a reference clock signal for synchronization from the first clock signal and the second clock signal based on the first interface number and the second interface number.

Another aspect of the present disclosure provides another network switch device. The network switch device includes a first port, a second port and a processing device. The first port is configured to receive a first clock signal, wherein the first port has a first port number. The second port is configured to receive a second clock signal, wherein the second port has a second port number, wherein the first clock signal and the second clock signal have the same quality level. The processing device is configured to select a reference clock signal for synchronization from the first clock signal and the second clock signal based on the first port number and the second port number.

Another aspect of the present disclosure provides a method of operating a network switch device, comprising the steps of: receiving a first clock signal at a first port of the network switch device, the first port having a first interface including a first interface number; receiving a second clock signal at a second port of the network switch device, the second port having a second interface including a second interface number, wherein the first clock signal and the second clock signal have the same quality level; and selecting a reference clock signal for synchronization, based on the first interface number and the second interface number, from the first clock signal and the second clock signal.

Although the present disclosure and its advantages have been described in detail, it should be understood that various changes, substitutions and alterations can be made herein without departing from the spirit and scope of the disclosure as defined by the appended claims. For example, many of the processes discussed above can be implemented in different methodologies and replaced by other processes, or a combination thereof.

Moreover, the scope of the present application is not intended to be limited to the particular embodiments of the process, machine, manufacture, composition of matter, means, methods and steps described in the specification. As one of ordinary skill in the art will readily appreciate from the disclosure of the present disclosure, processes, machines, manufacture, compositions of matter, means, methods, or steps, presently existing or later to be developed, that perform substantially the same function or achieve substantially the same result as the corresponding embodiments described herein may be utilized according to the present disclosure. Accordingly, the appended claims are intended to include within their scope such processes, machines, manufacture, compositions of matter, means, methods, or steps.

## Claims

1. A network switch device, comprising:
a first port configured to receive a first clock signal, wherein the first port has a first interface including a first interface number;
a second port configured to receive a second clock signal, wherein the second port has a second interface including a second interface number, wherein the first clock signal and the second clock signal have the same quality level; and
a processing device configured to select a reference clock signal for synchronization from the first clock signal and the second clock signal based on the first interface number and the second interface number.

2. The network switch device of Claim 1, wherein the processing device is configured to select the reference clock signal based on an order of the first interface number and the second interface number.

3. The network switch device of Claim 1, wherein the processing device is configured to assign the first interface number and the second interface number to the first interface and the second interface, respectively.

4. The network switch device of Claim 1, wherein the first port includes a first port number and the second port includes a second port number, wherein the processing device is configured to select the reference clock signal based on the first port number and the second port number when the first interface number is identical to the second interface number.

5. The network switch device of Claim 4, wherein the processing device is configured to select the reference clock signal based on an order of the first port number and the second port number when the first interface number is identical to the second interface number.

6. The network switch device of Claim 4, wherein the processing device is configured to assign the first port number and the second port number to the first port and the second port, respectively.

7. A network switch device, comprising:
a first port configured to receive a first clock signal, wherein the first port has a first port number;
a second port configured to receive a second clock signal, wherein the second port has a second port number, wherein the first clock signal and the second clock signal have the same quality level; and
a processing device configured to select a reference clock signal for synchronization from the first clock signal and the second clock signal based on the first port number and the second port number.

8. The network switch device of Claim 7, wherein the processing device is configured to select the reference clock signal based on an order of the first port number and the second port number.

9. The network switch device of Claim 7, wherein the processing device is configured to assign the first port number and the second port number to the first port and the second port, respectively.

10. A method of operating a network switch device, comprising the steps of:
receiving a first clock signal at a first port of the network switch device, the first port having a first interface including a first interface number;
receiving a second clock signal at a second port of the network switch device, the second port having a second interface including a second interface number, wherein the first clock signal and the second clock signal have the same quality level; and
selecting a reference clock signal for synchronization, based on the first interface number and the second interface number, from the first clock signal and the second clock signal.

11. The method of Claim 10, further comprising:
assigning the first interface number to the first interface; and
assigning the second interface number to the second interface.

12. The method of Claim 10, wherein the step of selecting a reference clock signal for synchronization is performed based on an order of the first interface number and the second interface number.

13. The method of Claim 11, wherein the first port includes a first port number and the second port includes a second port number, and the step of selecting a reference clock signal for synchronization is performed based on the first port number and the second port number when the first interface number is identical to the second interface number.

14. The method of Claim 13, wherein the step of selecting a reference clock signal for synchronization is performed based on an order of the first port number and the second port number.

15. The method of Claim 10, wherein the first port includes a first port number and the second port includes a second port number, and the step of selecting a reference clock signal for synchronization is performed based on an order of the first port number and the second port number and an order of the first interface number and the second interface number.
